# EUROPÄISCHE PATENTSCHRIFT

(11) **EP 2 222 441 B1**
(45) Veröffentlichungstag und Bekanntmachung des Hinweises auf die Patenterteilung: **27.02.2013**
(21) Anmeldenummer: 08857701.0
(22) Anmeldetag: 26.11.2008
(51) Int. Cl.: B25F 5/02, H02K 5/173, H02K 7/08, F16C 35/06

(54) **WERKZEUGMASCHINE**
MACHINE TOOL
MACHINE-OUTIL

(30) Priorität: 07.12.2007 DE 102007059119
(43) Veröffentlichungstag der Anmeldung: 01.09.2010
(73) Patentinhaber: Robert Bosch GmbH, 70442 Stuttgart (DE)
(72) Erfinder: SIMM, Robert, CH-4566 Oekingen (CH); SINZIG, Bruno, CH-3380 Walliswil bei Niederbipp (CH); ACKERMANN, Christian, CH-4719 Ramiswil (CH)
(86) Internationale Anmeldenummer: PCT/EP2008/066207
(87) Internationale Veröffentlichungsnummer: WO 2009/071474

(56) Entgegenhaltungen:
- GB-A- 2 124 937
- US-A- 3 252 020
- US-A- 4 991 472

## Beschreibung

### Stand der Technik

Die Erfindung betrifft ein Elektrowerkzeug insbesondere ein Elektrohandwerkzeug, gemäß dem Oberbegriff des Anspruche 1. Das Elektrowerkzeug weist ein, vorzugsweise aus Kunststoff bestehendes, Gehäuse in einer Topf-Konstruktion bzw. Rohr-Konstruktion auf. Das Gehäuse umfasst also mindestens zwei in Längsrichtung des Elektrowerkzeugs benachbarte Gehäuseteile.

Bei Gehäusen von Elektrowerkzeugen wird zwischen einer Topf-Konstruktion (Rohr-Konstruktion) und einer Schalen-Konstruktion unterschieden. Bei einer Schalen-Konstruktion umfasst das Gehäuse zwei Gehäuseschalen, deren Anlage- bzw. Kontaktflächen in Längsrichtung des Elektrowerkzeugs verlaufen. Bei Topf-Konstruktionen verlaufen die Kontakt- bzw. Anlageflächen von zwei Gehäuneteilen im wesentlichen quer zur Längserstreckung des Elektrowerkzeugs die Gehäuseteile sind also nicht wie bei einer Schalen-Konstruktion in Querrichtung, sonder in Längsrichtung des Elektrowerkzeugs benachbart angeordnet. Bei Topf-Konstruktionon ist die sich in Längsrichtung des Elektrowerkzeugs erstreckende Ankerweite eines elektrischen Antriebsmotors in ihrem hinteren Bereich mittels eines am hinteren Gehäuseteil angeordneton hinteren Lagers drehbar gelagert. Dieses hintere Lager ist bei einer Topf-Konstruktion als Toslager ausgebildet, welches während des Betriebes des Elektrowerkzeugs in axialer Richtung relativ zu der Ankerwelle wandern kann. In der Folge wird ein Großteil der Lagerkräfte von einem in Längsrichtung der Ankerwelle von dem hinteren Lager beabstandeten größer dimensionierten vorderen Lager aufgenommen, welches als Festlager ausgebildet ist. Das vordere Lager ist bei einer Topf-Konstruktion als Wälzlager ausgebildet.

Aus US 4, 991, 472 A ist ein Elektrowerkzeug gemäß dem Oberbegriff des Anspruchs 1 bekannt.

Gemäß US 4, 991, 472 A ist das hintere, im Bereich des hinterer Gehäuseteils angeordnet Lager zum rotierbaren Lagern der Ankerwelle als ortsfest relativ zu der Ankerwelle angeordnetes Festlager auszubilden. Aufgrund der Ausbildung des hinteren Lagers als Festlager können von diesem größere Kräfte abgestützt werden, sodass in der Folge ein in Längsrichtung des Elektrowerkzeugs von dem hinteren Lager beabstandetes vorderes Lager kleiner dimensioniert werden kann, wodurch Bauraum im vorderen Bereich der Ankerwelle eingespart werden kann. Da dieser vordere Bereich bevorzugt von einem Getrieberaum umgeben ist, ergeben sich durch den größeren zur Verfügung stehenden Bauraum neue Möglichkeiten für die Getriebekonstruktion. Besonders bevorzugt ist eine Ausführungsform des Elektrowerkzeugs, bei der axial zwischen einem auf der Ankerwelle angeordneten Ankerpaket und dem hinteren Lager ein Kommutator zur elektrischen Kontaktierung des Ankerpakets angeordnet ist. Bei einer dieser Ausbildung des hinteren Lagers als Festlager wi rd die elektrische Kontaktierung durch den Kommutator verbessert, wodurch insgesamt die Entstörung und somit die elektromagnetische Verträglichkeit (FMV) des elekfrowerkzeugs verbessert wird. Bevorzugt ist das hintere Lager als reines Radiallager ausgebildet. Es ist jedoch auch eine Ausführungsform als kombiniertes Radial-/Axiallager zur gemeinsamen Aufnahme von Axial- und Radialkräfte realisierbar.

Um eine Relativbewegung des hinteren Lagers relativ zu der Ankerwelle sicher zu verhindern, ist bei dem Elektrowerkzeugs gemäß US 4, 991, 472 A der mindestens ein Abstützelement, das eine axiale Abstützfläche aufweist, miL der es an dem hinteren Lager anliegt. Anders ausgedrückt stützt sich das hintere Lager in axialer Richtung an der Abstitzfläche des mindestens einen Abstützelements ab.

Das aus US 4,991,472. A bekannte Abstützelement ist dabei längsschnittlich gesehen zumindest näherungsweise L-förmig konturiert ist, wobei ein sich in radialer Richtung nach innen erstreckende Schenkel des längsschnitlich L-förmig konturierten Abstützelements die Abstützfläche zur axialen Anlage des hinteren Lagers bildet. Bevorzugt ist die Abstützfläche dabei halbkreisförmig konturiert. Anders ausgedrückt befindet sich die Abstützfläche an einer dem hinteren Lager zugewandten, also dem Ankerpaket abgewandten inneren Stirnseite des Abstützelements.

### Offenbarung der Erfindung

### Technische Aufgabe

Der Erfindung liegt die Aufgabe zugrunde, das aus US 4,991,472 A bekannte Elektrowerkzeug derart weiterzubilden, so dass eine Montierbarkeit des Abstützelements vorteilhaft verbessern wird.

### Technische Lösung

Diese Aufgabe wird mit einem Elektrowerkzeug mit den Merkmalen des Anspruchs 1 gelöst. Vorteilhafte Weiterbildungen der Erfindung sind in den Unteransprüche angegeben.

Um eine exakte und feste Positionierung des mindestens einen Abstützelements im Elektrowerkzeug sicherzustellen, ist eine Ausführungsform des Elektrowerkzeugs bevorzugt, bei der das mindestens eine Abstützelement als Rastelement ausgebildet ist, welches im bzw. am hinteren Gehäuseteil verrastbar ist. Bevorzugt weist das Abstützelement hierzu eine, vorzugsweise in radialer Richtung nach außen weisende Rastnase und/oder mindestens eine in radialer Richtung nach innen weisende Rastausnehmung zum Zusammenwirken mit einem korrespondierenden Rastbereich des Gehäuses auf.

Von besonderem Vorteil ist eine Ausführungsform des hinteren Lagers, bei der dieses zur Aufnahme großer Kräfte als Wälzlager ausgebildet ist. Bevorzugt handelt es sich bei dem Wälzlager um ein Kugellager mit mehreren in Umfangsrichtung nebeneinander angeordneten Kugeln, die in einem Käfig, umfassend einen radial inneren Laufring und einen radial äußeren Laufring ausgebildet sind. Der radial innere Laufring sitzt bevorzugt drehfest auf der Ankerwelle, wohingegen sich der äußere Laufring in radialer Richtung, vorzugsweise am hinteren Gehauseteil, abstützt. Zur Realisierung eines Festlagers ist eine Ausführungsform bevorzugt, bei der sich der äußere Ring zusätzlich in beide Axialrichtungen abstülzt.

Von besonderem Vorteil ist eine Weiterbildung des Elektrowerkzeugs, bei der zusätzlich zu dem hinteren Ankerwellenlager ein vorderes Lager zur drehenden Lagerung der Ankerwelle vorgesehen ist. Dieses vordere Lager befindet sich bevorzugt auf einer von dem hinteren Lager abgewandten Scite des fest auf der Ankerwelle sitzenden Ankerpakets, insbesondere im Bereich eines Getrieberaums.

In Weiterbildung der Erfindung ist mit Vortei- vorgesehen, dass das vordere Lager wälzkörperfroi ausgebildet ist. Bevorzugt handelt es sich, insbesondere aus Gründen der Bauraumminimierung, um ein Gleitlager. Eine derartige Ausführungsform ist insbesondere dann realisierbar, wenn das hintere, als Festlager ausgebildete Lager ein Wälzlager ist.

Bevorzugt ist das mindestens eine Abstützelement derart ausgebildet und/oder angeordnet, dass es eine Verstellbewegung des hinteren Lagers in Richtung des Ankerpakets der Ankerwelle verhindert. Durch die Ausbildung des mindestens einen Abstützelements teilweise oder vollständig aus Kunststoff kann auf einfache Weise eine Dämpfungsfunktion realisiert werden.

Besonders bevorzugt ist eine Ausführungsform des Elektrowerkzeugs, bei der das hintere Gehäuseteil als ein an dem mindestens einen, vorzugsweise topfförmigen oder röhrenförmigen, vorderen Gehäuseteil anlegbarer Gehäusedeckel ausgebildet ist. Dabei kann der Gehäusedeckel im wesentlichen plattenförmig ausgebildet sein. Besonders bevorzugt umfasst das hintere Gehäuseteil einen (hinteren) Bodenabschnitt und zumindest abschnittsweise eine sich in Längsrichtung des Elektrowerkzeugs, sowie in Umfangsrichtung erstreckende Umfandswand. Es ist auch eine Ausführungsform mit einer umlaufenden Umfangswand realisierbar. Bei dieser Ausführungsform ist das hintere Gehäuseteil wannenartig ausgebildet. Von besonderem Vorteil is eine Ausführungsform, bei der nicht nur ein einziges Abstützelement vorgesehen ist, sondern bei der mehrere, vorzugsweise in Umfangsrichtung gleichmaßig verteilt angeordnete Abstützelemente zum axialen Abstützen des hinteren Lagers vorgesehen sind. Besonders bevorzugt umfasst das elektrowerkzeug zwei derartige Abstützelemente, die vorzugsweise spiegelsymmetrischen ausgebildet und/oder angeordnet sind. Besonders bevorzugt sind beide Abstützelemente als Rastelemente zum verrasten mit mindestens einem Vorsprunq und/oder mindestens einer Vertiefung des hinteren Gehäuseteils ausgebildet.

Um ein Wandern des hinteren Lagers relativ zu der Ankerwelle in eine hintere, von dem Ankerpaket weg weisende Richtung zu vermeiden, ist eine Ausführungsform bevorzuqt, bei der sich das hintere Lager nach hinten unmittelbar am hinteren Gehäuseteil abstützend angeordnet ist. Bevorzugt stützt sich das Lager auch in radialer Richtung an dem hinteren Gehäuseteil ab. Zur abstützenden Aufnahme des hinteren Lagers am bzw. im hinteren Gehäuseteil ist am hinteren Gehäusteil, vorzugsweise an einem Bodenabschnitt des hinteren Gehäuseteils bevorzugt ein Dom angeformt, der das hintere Lager zumindest abschnittsweise axial und in Umfangsrichtung umschließt.

### Kurze Beschreibung der Zeichnungen

Weitere Vorteile, Merkmale und Einzelheiten der Erfindung ergeben sich aus der nachlolgenden Beschribung bevorzugter Ausführungsbeispiele sowie anhang der Zeichnungen. Diese zeigen in :

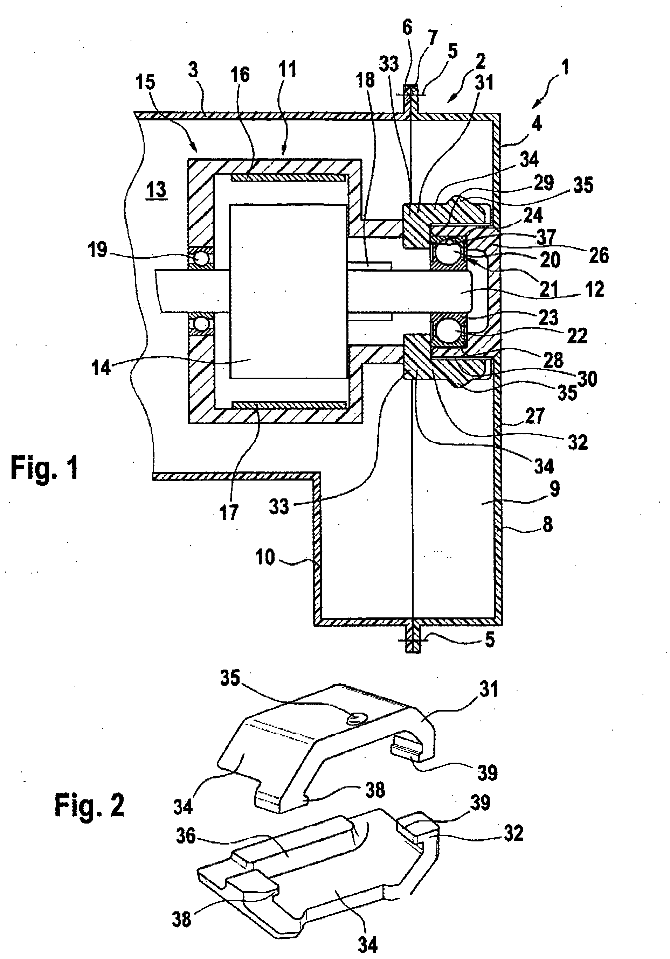

- Fig. 1:: eine stark schematisierte, in Längsrichtung geschnittene Teilansicht eines Elektrowerkzeugs mit einem in Toptfauweise ausgebildeten Gehäuse, und
- Fiq. 2:: zwei schalenartige Abstützelemente aus KunsLstoff zum axialen Abstützen eines hinteren, in Fig. 1 gezeigten Lagers zur drehenden Lagerung einer Ankerwelle im Gehäuse des Elektrowerkzeugs.

### Ausführungsformen der Erfindung

In den Figuren sind gleiche Bauteile und Hauteile mit der gleichen Funktion mit den gleichen Bezugszeichen gekennzeichnet.

In Fig. 1 ist stark schematisiert in einer Längsschnittansicht ein hinterer Ausschnitt eines als Elektrobandwerkzeug ausgebildeten Elektrowerkzeugs 1 gezeigt. Das Elecktrowerkzeuq 1 umfasst ein Gehäuse 2, das in einer sogenannten Topf-Konstruktion bzw. Rohr-Konstruktion aufgebaut ist. Das Gehäuse 2 ist gebildet aus einem vorderen rohr- oder Lopfförmigen Gehäuseteil 3 und einem in Längsrichtung zu dem vorderen Gehäuseteil 3 benachbarten hinteren Gehäuseteil 4. Das hintere Gehäuseteil 4 ist als Gehäusedeckel ausgebildet und mit Hilfe von Befestigungsschrauben 5, die sich im wesentlichen in Längsrichtung des Elektrowerkzeugs 1 erstrecken, am vorderen Gehäuseteil 3 festgelegt. Die Gehäuseteile 3, 4 liegen an sich in Umfangsrichtung erstreckenden, quer zur Längserstreckung des Elektrowerkzeugs 1 orientierten Kontaktflächen 6, 7 aneinander an. Beide Gehäuseteile 3, 4 sind als Kunststoffspritzgussteile ausgebildet. Das hintere Gehäuseteil 4 bildet an einem in der Zeichnungsebene unteren Abschnitt einen hinteren Abschnitt 8 eines Handgriffs 9, wohingegen ein vorderer Abschnitt 10 des Handgriffs 9 von dem vorderen Gehäuseteil 3 gebildet ist.

Innerhalb des Gehäuses 2 ist ein elektrischer Antriebsmotor 11 angeordnet, der eine sich in Längsrichtung des Elektrowerkzeugs 1 erstreckende, drehbar gelagert Ankerwelle 12 aufweist. Mit der Ankerwelle 12 ist entweder unmittelbar ein Werkzeug, beispielsweise ein Bobrer bzw. eine WerkzeugAufnahme zur Aufnahme eines Werkzeugs, beispielsweise eines Bohrers, antreibbar. Alternativ ist zwischen dem Werkzeug bzw. der Werkzeugaufnahme und der Ankerwelle 12 ein nicht gezeigtes Getriebe in einem Getrieberaum 13 angeordnet. Der Getrieberaum 13 befindet sich im vorderen, rohrförmigen Gchäuseteil 3 in Längsrichtung des Elektrowerkzeugs 1 gesehen vor einem drehfest auf der Ankerwelle 12 sitzenden Ankerpaket 14 mit einer aus Übersichtlichkeitsgründen nicht dargestellten Ankerwicklung.

Das Ankerpaket 14 ist umgeben von einem inneren Motorgehäuse 15, das einteilig mit dem Gehäuse 2 ausgebildet ist. Das innere Motorgehäuse 1b träqt radial außerhalb des Ankerpakets 14 zwei einander gegenüberliegende Permanentmagnete 16, 17 des Antriebsmotors 11.

Auf der in der Zeichnungsebene rechten Seite des Ankerpakets 14 ist ein stark schematisiert dargestellter Kommutator 18 zur elektrischen Kontaktierung des Ankorpakets 14 vorgsehen, wobei die elektrischen Kontakte (Kohlebürsten) aus Übersichtlichkeitsgründen nicht dargestellt sind.

Auf der in der Zeichnungsebene linken, d.h. vorderen Seite des Ankerpakets 14 ist ein als Gleitlager ausgebildetes vorderes Lager 19 zur Aufnahme von axialen und radialen Kräften vorgesehen. In dem gezeigten Ausführungsbeispiel wird das vordere Lager 19 von dem inneren Motorgehäuse 15 gebildet, bzw. ist an diesem angeordnet.

Auf der hinteren Seite des Ankerpakels 14 mit Axialabstand zu diesem benachbart zum Kommutator 18 ist ein hinteres Lager 20 zum rotierenden Lagern der Ankerwelle 12 vorgesehen. Das hintere, als Wälzlager (hier Kugellager) ausgebildete Lager 20 ist als Festlager ausgebildet, weist also eine feste Relativposition zur Ankerwelle 12 auf. Das hintere Lager 20 besteht in dem gezeigten Ausführungsbeispiel aus einem Käfig 21 für eine Vielzahl von in Umfangsrichtung rollen angeordneten Kugeln 22, die in Laufrinnen angeordnet sind, die von einem radial inneren Laufring 23 und einem radial äußeren Laufring 24 gebildet sind. Die beiden Laufringe 23, 24 sind über sich in radialer Richtung erstreckende Streben 25 aneinander festgelegt.

Der innere Laufring 23 sitzt drehfest, vorzugsweise mittels eines Presssitzes auf der Ankerwelle 12, wohingegen sich der äußere Laufring 24 sowohl in radialer Richtung nach außen als auch in beide Axialrichtungen (Längsrichtungen) an noch zu erläuternden Bauteilen des Elektrowerkzeugs 1 abstützt.

In axialer Richtung nach hinten stützt sich das hintere Lager 20 mit seinem radial äußeren Laufring 24 an einem napfförmigen Dom 26 ab, der sich in Längsrichtung des Elektrowerkzeugs 1 von einem Bodenabschnitt 27 des hinteren Gehäuseteils 4 ersteckt. Zum axialen Abstützen des radial äußeren Laufrinqs 24 ist im Dom 26 eine umlaufende Ringschulser 28 ausgebildet. In radialer Richtung nach außen stützt sich der radial äußere Laufring 24 an einem Umfangswandabscnitt 29 des Doms 26 ab. Anders ausgedrückt ist das hintere Lager 20 in einer Ausnehmung 30 im Dom 26 angeordnet.

Die Ausnehmung 30 wird auf der der Ringschulter 28 gegenüberllegenden Seite abschnittsweise verschlossen von zwei in Hochrichtung des Elektrowerkzeugs 1 voneinander beabstandeten, schalenartigen Abstützelementen 31, 32, die in Fig. 2 in einer perspektivischen Ansicht gezeigt sind.

Wie sich aus Fig. 1 ergibt, sind die Abstützelemente 31, 32 im Längsschnitt gesehen zumindest näherungsweise L-förmig konturiert und weisen jeweils einen nach radial innen weisenden Schenkel 33, sowie einen sich in axialer RichLunq nach hinten erstreckenden, rechtwinklig zu dem Schenkel 33 angeordneten Schenkel 34 auf. Die Abstützelentente 31, 32 sind als Rastelemente ausgebildet und weisen jeweils eine in radialer Richtung nach außen weisende, am Schenkel 34 angeordnete, Rastnase 35 auf, die mit einer nicht gezeigten Ausnehmung im hinteren Gehäuseteil 4 verrastend zusammenwirkt. Die voneinander beabstandeten Abstützelemente 31, 32 anschließen den Dom 26 abschnittsweise, derart, dass jeweils der Schenkel 34 radial außen an dem Umfargsabschnitt 29 des Doms anliegt. Der sich jeweils in radialer Richtung nach innen erstreckende Schenkel 33 überragt die Ausnehmung 30 bereichsweise derart, dass sich das hintere Lager 20 mit seinem radial äußeren Laufring 24 an der inneren Stirnseite 36 jedes Abstützelementes 31, 32 abstützt. Anders ausgedrückt bilden die inneren stirnseiten 36 in einem radial inneren Bereich jeweils eine Abstützfläche 37 zum axialen Abstützen des radial äußeren Laufrings 24. Somit ist das hintere Lager 20 in axialer Richtung eingeschlossen zwischen den Schenkeln 33 und der Ringschlulter 28 des Doms 26, sodass eine axiale Relativbewegung des hinteren Lagers 20 relativ zur Ankerwelle 12 mit Vorteil vermieden wird.

In Fig. 2 sind die Abstützelemente 31, 32 in einer perspektivischen Ansicht in ihrer Montageposition gezeigt. Zu erkennen sind die sich im wesentlichen rechtwinklig zueinander erstreckenden Schenkel 33, 34 sowie die nach radial anßen weisende Rastnase 35. Ferner umfassen die Abstützelemente 31, 32 zwei hintere, radial nach innen weisende Rastnasen 38, 39 zum Zusammenwirken mit korrespondierenden, nicht gezeigten Ausnehmungen im Dom 26 des hinteren Gehäuseteils 4.

## Patentansprüche

1. Elektrowerkzeug mit einem Gehäuse (2), das ein hinteres Gehäuseteil (4) und mindestens ein in Längsrich-Lung des Elektrowerkzeugs (1) vor dem hinteren Gehäuseteil (4) angeordnetes vorderes Gehäuseteil (3) autweist, und mit einem eine sich in Längsrichtung des Elektrowerkzeugs (1) erstreckende Ankerwelle (12) aufweisenden elektrischen Antriebsmotor (11), wobei die Ankerwelle (12) mit einem hinteren, am hinteren Gehäuseteil (4) angeordneten Lager (20) drehbar gelagert und als Festlager ausgebildet ist, und des weiteren mindestens ein Abstützelement (31, 32) mit einer axialen Abstützfläche (37) zur Anlage des hinteren Lagers (20) vorgesehen isL, welches längsschnittlich zumindest näherungsweise L-förmig konturiert ist, und dass die Abstützfläche (37) an einem sich in radialer Richtung nach innen erstreckenden Schenkel (33) des Abstützelementes (31, 32) ausgebildet isL,
**dadurch gekennzeichnet,**
**dass** mindestens eine Rastnase (3b, 38, 39) und/oder Rastvertiefung an einem sich in axialer Richtung erstreckenden Schenkel (34) des Abstüzelementes (31, 32) vorgesehen isL.

2. Elektrowerkzeug nach Anspruch 1,
**dadurch gekennzeichnet,**
**dass** das hintere Lager (20) als Wälzlager, vorzugsweise als Kugellager, ausgebildet ist.

3. Elektrowerkzeug nach einem der Ansprüche 1 oder 2,
**dadurch gekennzeichnet,**
**dass** mit Axialabstand zu dem hinteren Lager (20), vorzugsweise auf einer von dem hinteren Lager (20) abgewandlen Seite eines Ankerpakets (14), ein vorderes Lager (19) zum Lagern der Ankerwelle (12) vorgesehen ist.

4. Elektrowerkzeug nach Anspruch 3,
**dadurch gekennzeichnet,**
**dass** das vordere Lager (19) als Gleitlager ausgebildet ist.

5. Elektrowerkzeug nach Anspruch 1,
**dadurch gekennzeichnet,**
**dass** das Abstützelement (31, 32) als am hinteren Cehäusetei- (4) festlegbares Rastelement ausgebildet ist.

6. Elektrowerkzeug nach einem der Ansprüche 1 oder 5,
**dadurch gekennzeichnet,**
**dass** zwei Abstützelemente (31, 32) vorgesehen sind.

7. Elektrowerkzeug nach Anspruch 6,
**dadurch gekennzeichnet,**
**dass** die Abstützelemente (31, 32) Spiegelsymmetrisch angeordnet sind.

8. Elektrowerkzeug nach Anspruch 6,
**dadurch gekennzeichnet,**
**dass** die Abstützelemente (31, 32) spiegelsymmetrisch ausgebildet sind.

9. Elektrowerkzeug nach einem der vorhergehenden Ansprüche,
**dadurch gekennzeichnet,**
**dass** sich das hintere Lager (20) in axialer Richtung nach hinten am hintoren Gehäuseteil (4) abstützend angeordnet ist.

10. Elektrowerkzeug nach einem der vorhergehenden Ansprüche,
**dadurch gekennzeichnet,**
**dass** sich das hintere Lager (20) in radialer Richtung am hinteren Gehäuseteil (4) abstützend angeordnet ist.

11. Elektrowerkzeug nach einem der Ansprüche 9 oder 10,
**dadurch gekennzeichnet,**
**dass** sich das hintere Lager (20) an einem sich in axialer Richtung erstreckenden Dom (26) des hinteren Gehäuseteils (4), abstützend angeordnet ist.

12. Elektrowerkzeug nach einem der vorhergehenden Ansprüche,
**dadurch gekennzeichnet,**
**dass** das Abtsützelement (31, 32) aus Kunststoff besteht.

## Claims

1. Electric tool with a housing (2) which has a rear housing part (4) and at least one front housing part (3) arranged in front of the rear housing part (4) in the longitudinal direction of the electric tool (1), and with an electric drive motor (11) having an armature shaft (12) extending in the longitudinal direction of the electric tool (1), wherein the armature shaft (12) is mounted rotatably at a rear bearing (20) arranged on the rear housing part (4) and is designed as a fixed bearing, and, furthermore, at least one supporting element (31, 32) having an axial supporting surface (37) for contact with the rear bearing (20) is provided, the supporting element being contoured at least approximately in an L-shaped manner in longitudinal section, and wherein the supporting surface (37) is formed on a limb (33) of the supporting element (31, 32), the limb extending inwards in the radial direction, **characterized in that** at least one latching lug (35, 38, 39) and/or latching depression are/is provided on a limb (34) of the supporting element (31, 32), the limb extending in the axial direction.

2. Electric tool according to Claim 1, **characterized in that** the rear bearing (20) is designed as a rolling bearing, preferably as a ball bearing.

3. Electric tool according to either of Claims 1 and 2, **characterized in that** a front bearing (19) for the mounting of the armature shaft (12) is provided at an axial distance from the rear bearing (20), preferably on a side of an armature assembly (14) that faces away from the rear bearing (20).

4. Electric tool according to Claim 3, **characterized in that** the front bearing (19) is designed as a plain bearing.

5. Electric tool according to Claim 1, **characterized in that** the supporting element (31, 32) is designed as a latching element which is fixable on the rear housing part (1).

6. Electric tool according to either of Claims 1 and 5, **characterized in that** two supporting elements (31, 32) are provided.

7. Electric tool according to Claim 6, **characterized in that** the supporting elements (31, 32) are arranged mirror-symmetrically.

8. Electric tool according to Claim 6, **characterized in that** the supporting elements (31, 32) are formed mirror-symmetrically.

9. Electric tool according to one of the preceding claims, **characterized in that** the rear bearing (20) is arranged to the rear in the axial direction in a manner supported on the rear housing part (4).

10. Electric tool according to one of the preceding claims, **characterized in that** the rear bearing (20) is arranged in the radial direction in a manner supported on the rear housing part (4).

11. Electric tool according to either of Claims 9 and 10, **characterized in that** the rear bearing (20) is arranged in a manner supported on a dome (26) of the rear housing part (4), the dome extending in the axial direction.

12. Electric tool according to one of the preceding claims, **characterized in that** the supporting element (31, 32) is composed of plastic.

## Revendications

1. Outil électrique comportant un boîtier (2) qui comprend une partie de boîtier arrière (4) et au moins une partie de boîtier avant (3) disposée avant la partie de boîtier arrière (4) dans la direction longitudinale de l'outil électrique (1), et comportant un moteur d'entraînement électrique (11) comprenant un arbre d'induit (12) s'étendant dans la direction longitudinale de l'outil électrique (1), l'arbre d'induit (12) étant monté à rotation à l'aide d'un palier arrière (20) disposé sur la partie de boîtier arrière (4) et étant réalisé sous forme de palier fixe, et au moins un élément d'appui (31, 32) doté d'une surface d'appui axiale (37) étant en outre prévu pour l'appui du palier arrière (20), lequel élément d'appui présente un contour au moins approximativement en forme de L en coupe longitudinale, et la surface d'appui (37) étant réalisée sur une branche (33) de l'élément d'appui (31, 32) s'étendant vers l'intérieur dans la direction radiale,
**caractérisé en ce**
**qu'**au moins un ergot d'encliquetage (35, 38, 39) et/ou un évidement d'encliquetage sont prévus sur une branche (34) de l'élément d'appui (31, 32) s'étendant dans la direction axiale.

2. Outil électrique selon la revendication 1,
**caractérisé en ce**
**que** le palier arrière (20) est réalisé sous forme de palier à roulement, de préférence sous forme de palier à billes.

3. Outil électrique selon la revendication 1 ou 2,
**caractérisé en ce**
**qu'**un palier avant (19) pour monter sur palier l'arbre d'induit (12) est prévu à distance axiale du palier arrière (20), de préférence d'un côté d'un noyau feuilleté d'induit (14) opposé au palier arrière (20).

4. Outil électrique selon la revendication 3,
**caractérisé en ce**
**que** le palier avant (19) est réalisé sous forme de palier lisse.

5. Outil électrique selon la revendication 1,
**caractérisé en ce**
**que** l'élément d'appui (31, 32) est réalisé sous forme d'élément d'encliquetage pouvant être fixé à la partie de boîtier arrière (4).

6. Outil électrique selon la revendication 1 ou 5,
**caractérisé en ce**
**que** deux éléments d'appui (31, 32) sont prévus.

7. Outil électrique selon la revendication 6,
**caractérisé en ce**
**que** les éléments d'appui (31, 32) sont disposés suivant une symétrie miroir.

8. Outil électrique selon la revendication 6,
**caractérisé en ce**
**que** les éléments d'appui (31, 32) sont réalisés avec une symétrie miroir.

9. Outil électrique selon l'une quelconque des revendications précédentes,
**caractérisé en ce**
**que** le palier arrière (20) est disposé de manière à s'appuyer contre la partie de boîtier arrière (4) vers l'arrière dans la direction axiale.

10. Outil électrique selon l'une quelconque des revendications précédentes,
**caractérisé en ce**
**que** le palier arrière (20) est disposé de manière à s'appuyer contre la partie de boîtier arrière (4) dans la direction radiale.

11. Outil électrique selon la revendication 9 ou 10,
**caractérisé en ce**
**que** le palier arrière (20) est disposé de manière à s'appuyer contre un dôme (26) de la partie de boîtier arrière (4) s'étendant dans la direction axiale.

12. Outil électrique selon l'une quelconque des revendications précédentes,
**caractérisé en ce**
**que** l'élément d'appui (31, 32) est constitué de plastique.
